# EUROPEAN PATENT APPLICATION

(11) **EP 4 299 669 A1**
(43) Date of publication of application: **03.01.2024**
(21) Application number: 22760054.1
(22) Date of filing: 23.02.2022
(51) Int. Cl.: C08L 25/12, C08L 51/04, C08L 35/06

(54) **THERMOPLASTIC RESIN COMPOSITION AND MOLDED ARTICLE USING SAME**

(30) Priority: 26.02.2021 KR 20210026485
(71) Applicant: Lotte Chemical Corporation, Seoul, 05551 (KR)
(72) Inventor: PARK, Jieun, Uiwang-si, Gyeonggi-do 16073 (KR); KWON, Keehae, Uiwang-si, Gyeonggi-do 16073 (KR); KIM, In-Chol, Uiwang-si, Gyeonggi-do 16073 (KR); KIM, Jungwook, Uiwang-si, Gyeonggi-do 16073 (KR); HONG, Jaekeun, Uiwang-si, Gyeonggi-do 16073 (KR)
(74) Representative: Germain Maureau
(86) International application number: PCT/KR2022/002670
(87) International publication number: WO 2022/182138

(57) **Abstract**

Provided is a thermoplastic resin composition including, based on 100 parts by weight of a base resin including (A-1) 15 to 30 wt% of a first acrylate-based graft copolymer in which the average particle diameter of acrylate-based rubbery polymers is 100 to 200 nm; (A-2) 10 to 25 wt% of a second acrylate-based graft copolymer in which the average particle diameter of acrylate-based rubbery polymers is 250 to 400 nm; (B) 10 to 20 wt% of an N-substituted maleimide copolymer; and (C) 40 to 60 wt% of an aromatic vinyl compound-vinyl cyanide compound copolymer, and (D) 1 to 5 parts by weight of an aromatic vinyl compound-vinyl cyanide compound copolymer having a weight average molecular weight of greater than or equal to 5,000,000 g/mol, wherein a weight ratio of (A-1) and (A-2) is 1:1 to 4:1.

## Description

### [Technical Field]

A thermoplastic resin composition and a molded article using the same are disclosed.

### [Background Art]

Recently, a thermoplastic resin variously applied to electric/electronic products, automobiles, construction materials, leisure goods, and the like has been rapidly replacing a conventional glass or metal area. Accordingly, demand for a thermoplastic resin capable of realizing excellent impact resistance, weather resistance, molding processability, and high-quality appearance is being increased.

In general, when an acrylonitrile-butadiene-styrene resin (hereinafter referred to as ABS resin) is used as a thermoplastic resin, there is a problem that an unsaturated double bond of the butadiene-based rubbery polymer is stimulated and the resin is decomposed by ultraviolet (UV) ray. This problem causes discoloration or cracking of the product made of ABS resin.

On the other hand, an acrylonitrile-styrene-acrylate resin (hereinafter referred to as ASA resins) that use an acrylate-based rubbery polymer instead of a butadiene-based rubbery polymer may is known as an alternative to solve the problem of decomposition of the resin due to UV because the acrylate-based rubbery polymer does not have unsaturated double bonds. In addition, an ASA resin has a lower specific gravity than glass or metal, and has excellent advantages such as moldability, chemical resistance, and thermal stability.

According to the recent environmental trend, there is an increasing demand for uncoated resin that does not undergo a painting process. Since the surface of the molded article using the uncoated resin is not covered by painting, it is necessary to implement improved appearance characteristics of the uncoated resin itself. In order to improve the appearance characteristics of the uncoated resin, it is necessary to suppress a generation of flow marks on the surface of the molded article using the uncoated resin. For this purpose, attempts have been made to use a small particle-diameter impact modifier or to improve fluidity of the resin, but the impact resistance of the resin may be significantly reduced.

Therefore, it is necessary to develop a thermoplastic resin composition capable of realizing improved appearance characteristics while maintaining improved impact resistance, heat resistance, and fluidity.

### [Disclosure]

### [Description of the Drawings]

### [Technical Problem]

An embodiment provides a thermoplastic resin composition capable of realizing improved appearance characteristics while maintaining improved impact resistance, heat resistance, and fluidity.

Another embodiment provides a molded article using the thermoplastic resin composition.

### [Technical Solution]

According to an embodiment, a thermoplastic resin composition includes, based on 100 parts by weight of a base resin including (A-1) 15 to 30 wt% of a first acrylate-based graft copolymer in which the average particle diameter of acrylate-based rubbery polymers is 100 to 200 nm; (A-2) 10 to 25 wt% of a second acrylate-based graft copolymer in which the average particle diameter of acrylate-based rubbery polymers is 250 to 400 nm; (B) 10 to 20 wt% of an N-substituted maleimide copolymer; and (C) 40 to 60 wt% of an aromatic vinyl compound-vinyl cyanide compound copolymer, and (D) 1 to 5 parts by weight of an aromatic vinyl compound-vinyl cyanide compound copolymer having a weight average molecular weight of greater than or equal to 5,000,000 g/mol, wherein a weight ratio of (A-1) and (A-2) is 1:1 to 4:1.

Each of the (A-1) first acrylate-based graft copolymer and the (A-2) second acrylate-based graft copolymer may be a graft copolymer of a mixture of an aromatic vinyl compound and a cyanide vinyl compound that is graft polymerized to 40 to 60 wt% of each acrylate-based rubber polymer.

At least one of the first acrylate-based graft copolymer (A-1) and the second acrylate-based graft copolymer (A-2) may be an acrylonitrile-styrene-acrylate graft copolymer.

An N-substituted maleimide-derived component may be included in an amount of 20 to 55 wt% based on 100 wt% of the (B) N-substituted maleimide-based copolymer.

A glass transition temperature (Tg) of the (B) N-substituted maleimide-based copolymer may be 150 to 200 °C.

The (B) N-substituted maleimide-based copolymer may be an N-phenyl maleimide-styrene-maleic anhydride (PMI-SM-MAH) copolymer.

The (C) aromatic vinyl compound-vinyl cyanide compound copolymer may be a copolymer of a monomer mixture including 60 to 80 wt% of an aromatic vinyl compound and 20 to 40 wt% of a vinyl cyanide compound.

A weight average molecular weight of the (C) aromatic vinyl compound-vinyl cyanide compound copolymer may be 80,000 to 200,000 g/mol.

In the (C) aromatic vinyl compound-vinyl cyanide compound copolymer, the aromatic vinyl compound may include styrene unsubstituted or substituted with a halogen (but not including alpha-methyl styrene) or a C1 to C10 alkyl group, or a combination thereof and the vinyl cyanide compound may include acrylonitrile, methacrylonitrile, fumaronitrile, or a combination thereof.

The (C) aromatic vinyl compound-vinyl cyanide compound copolymer may be a styrene-acrylonitrile copolymer.

The (D) aromatic vinyl compound-vinyl cyanide compound copolymer having the weight average molecular weight of greater than or equal to 5,000,000 g/mol may be a styrene-acrylonitrile copolymer having a weight average molecular weight of greater than or equal to 5,000,000 g/mol.

The thermoplastic resin composition may further include 0.1 to 1 part by weight of (E) a UV stabilizer based on 100 parts by weight of the base resin.

The thermoplastic resin composition may further include at least one additive selected from a flame retardant, a nucleating agent, a coupling agent, filler, a plasticizer, an impact modifier, a lubricant, an antibacterial agent, a release agent, a heat stabilizer, an antioxidant, a pigment, and a dye.

According to another embodiment, a molded article using the aforementioned thermoplastic resin composition is provided.

### [Advantageous Effects]

Provided are a thermoplastic resin composition that is capable of realizing improved appearance characteristics while maintaining improved impact resistance, heat resistance, and fluidity and a molded article using the same.

### [Mode for Invention]

Hereinafter, embodiments of the present invention are described in detail. However, these embodiments are exemplary, the present invention is not limited thereto and the present invention is defined by the scope of claims.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubbery polymer refers to a volume average diameter, and means a Z-average particle diameter measured using a dynamic light scattering analysis equipment.

In the present specification, unless otherwise mentioned, the weight average molecular weight is measured by dissolving a powder sample in an appropriate solvent and then performing gel permeation chromatography (GPC, a 1200 series made by Agilent Technologies Inc.) (a standard sample is polystyrene made by Shodex).

A thermoplastic resin composition according to an embodiment includes, based on 100 parts by weight of a base resin including (A-1) 15 to 30 wt% of a first acrylate-based graft copolymer in which the average particle diameter of acrylate-based rubbery polymers is 100 to 200 nm; (A-2) 10 to 25 wt% of a second acrylate-based graft copolymer in which the average particle diameter of acrylate-based rubbery polymers is 250 to 400 nm; (B) 10 to 20 wt% of an N-substituted maleimide copolymer; and (C) 40 to 60 wt% of an aromatic vinyl compound-vinyl cyanide compound copolymer, and (D) 1 to 5 parts by weight of an aromatic vinyl compound-vinyl cyanide compound copolymer having a weight average molecular weight of greater than or equal to 5,000,000 g/mol, wherein a weight ratio of (A-1) and (A-2) is 1:1 to 4:1.

Hereinafter, each component included in the thermoplastic resin composition will be described in detail.

### (A-1) First and (A-2) Second Acrylate-based Graft Copolymer

The thermoplastic resin composition according to an embodiment includes a (A-1) first acrylate-based graft copolymer and a (A-2) second acrylate-based graft copolymer including the acrylate-based rubbery polymers having different average particle diameters. When the acrylate-based graft copolymers including the acrylate-based rubbery polymers having different average particle diameters are used together, the thermoplastic resin composition including the same may realize improved impact resistance, fluidity, and appearance characteristics.

In an embodiment, each of the (A-1) first acrylate-based graft copolymer and the (A-2) second acrylate-based graft copolymer may be prepared by graft polymerization of a monomer mixture of an aromatic vinyl compound and a vinyl cyanide compound to 40 to 60 wt% of an acrylate-based rubbery polymer based on 100 wt% of the copolymer.

The graft polymerization may be a conventional production method, for example, emulsion polymerization, suspension polymerization, solution polymerization, and bulk polymerization. As a non-limiting example, it may be produced by a method that includes preparing a core in which an acrylate-based rubbery polymer is formed of one or more layers, graft polymerizing a monomer mixture including the aforementioned aromatic vinyl compound and cyanide vinyl compound to the core, to form a shell of one or more layers.

The (A-1) first acrylate-based graft copolymer and the (A-2) second acrylate-based graft copolymer may be formed using the same polymerization method or may be formed using different polymerization methods.

The acrylate-based rubbery polymer may be an alkyl acrylate-based rubber, and may be, for example, a crosslinked polymer prepared by using C2 to C10 alkyl acrylate as a main monomer. The C2 to C10 alkyl acrylate may be methyl acrylate, ethyl acrylate, butyl acrylate, 2-ethyl hexyl acrylate, hexyl acrylate, or a mixture thereof, but is not necessarily limited thereto.

The C2 to C10 alkyl acrylate may be a copolymer of one or more radically polymerizable other monomers, and the other radically polymerizable monomers may be, for example, an aromatic vinyl compound or a silicone compound.

The aromatic vinyl compounds may include styrene, alpha-methyl styrene, p-methyl styrene, p-t-butyl styrene, 2,4-dimethyl styrene, chlorostyrene, vinyl toluene, and vinyl naphthalene, which may be used alone or in combination and for example styrene may be used.

The vinyl cyanide compound may include acrylonitrile, methacrylonitrile, fumaronitrile, and the like, and these may be used alone or in combination and for example, acrylonitrile may be used.

At least one of the (A-1) first acrylate-based graft copolymer and the (A-2) second acrylate-based graft copolymer may be an acrylonitrile-styrene-acrylate graft copolymer (g-ASA). In an embodiment, each of the (A-1) first acrylate-based graft copolymer and the (A-2) second acrylate-based graft copolymer may be an acrylonitrile-styrene-acrylate graft copolymer (g-ASA).

In an embodiment, the (A-1) first acrylate-based graft copolymer may have an average particle diameter of the acrylate-based rubbery polymers of greater than or equal to 100 nm, for example, greater than or equal to 120 nm, for example less than or equal to 200 nm, for example 100 to 200 nm, for example 120 to 200 nm.

In an embodiment, the (A-1) first acrylate-based graft copolymer may be included in an amount of greater than or equal to 15 wt%, for example greater than or equal to 20 wt%, for example less than or equal to 30 wt%, for example less than or equal to 25 wt%, for example 15 to 30 wt%, for example 20 to 30 wt% based on 100 wt% of the base resin.

In an embodiment, the (A-2) second acrylate-based graft copolymer may have an average particle diameter of the acrylate-based rubbery polymers of greater than or equal to 250 nm, for example greater than or equal to 300 nm, and for example less than or equal to 400 nm, for example less than or equal to 350 nm, for example 250 to 400 nm, for example 300 to 400 nm.

In an embodiment, the (A-2) second acrylate-based graft copolymer may be included in an amount of greater than or equal to 10 wt%, for example greater than or equal to 15 wt%, for example less than or equal to 25 wt%, for example less than or equal to 20 wt% by weight, for example 10 to 25 wt%, for example 15 to 25 wt% based on 100% by weight of the base resin.

In an embodiment, a weight ratio of the (A-1) first acrylate-based graft copolymer and the (A-2) second acrylate-based graft copolymer may be 1:1 to 4:1, for example 1:1 to 3 :1, for example 1:1 to 2:1. Within the weight ratio range, the thermoplastic resin composition may have excellent impact resistance, fluidity, and appearance.

### (B) N-substituted Maleimide-based Copolymer

In an embodiment, the N-substituted maleimide-based copolymer may improve heat resistance of the thermoplastic resin composition.

The N-substituted maleimide-based copolymer may be an N-phenyl maleimide (PMI)-based copolymer, for example, an N-phenyl maleimide-styrene-maleic anhydride (PMI-SM-MAH) copolymer.

According to an embodiment, the N-phenyl maleimide-styrene-maleic anhydride copolymer may be prepared through an imidization reaction of a styrene and maleic anhydride copolymer, and may also be prepared through a conventional polymerization method using N-phenyl maleimide, styrene, and maleic anhydride as monomers.

The N-phenyl maleimide-styrene-maleic anhydride copolymer may include 20 to 60 wt%, for example 30 to 60 wt% of an N-phenyl maleimide-derived component, 30 to 70 wt%, for example 30 to 60 wt% of a styrene-derived component, and 1 to 15 wt%, for example 1 to 10 wt% of a maleic anhydride-derived component based on 100 wt% of the copolymer. A thermoplastic resin composition containing the same within the above range and a molded article produced therefrom may exhibit excellent heat resistance and appearance.

A glass transition temperature (Tg) of the (B) N-substituted maleimide-based copolymer may be 150 to 200 °C, for example 155 to 200 °C, for example 165 to 200 °C.

The (B) N-substituted maleimide-based copolymer may have a weight average molecular weight (Mw) of 100,000 to 300,000 g/mol, for example 100,000 to 200,000 g/mol. When the weight average molecular weight of the (B) N-substituted maleimide-based copolymer is within the above range, a thermoplastic resin composition including the same and a molded article manufactured therefrom may exhibit excellent heat resistance and fluidity.

In an embodiment, the (B) N-substituted maleimide-based copolymer may be included in an amount of greater than or equal to 10 wt%, for example less than or equal to 20 wt%, for example 10 to 20 wt% based on 100 wt% of the base resin. A thermoplastic resin composition including the same within the above range and a molded article produced therefrom may exhibit excellent heat resistance and appearance.

### (C) Aromatic Vinyl Compound-Vinyl Cyanide Compound Copolymer

In an embodiment, the aromatic vinyl compound-vinyl cyanide compound copolymer may be a copolymer of a monomer mixture including an aromatic vinyl compound and a vinyl cyanide compound. The (C) aromatic vinyl compound-vinyl cyanide compound copolymer may have a weight average molecular weight (Mw) of greater than or equal to 80,000 g/mol, for example greater than or equal to 85,000 g/mol, for example greater than or equal to 90,000 g/mol, and for example less than or equal to 200,000 g/mol, for example less than or equal to 150,000 g/mol, for example 80,000 to 200,000 g/mol, or for example 80,000 to 150,000 g/mol.

The aromatic vinyl compound may be styrene unsubstituted or substituted with a halogen (provided that, alpha-methyl styrene is not included) or a C1 to C10 alkyl group, or a combination thereof. Specific examples of the aromatic vinyl compound may include at least one selected from styrene, C1 to C10 alkyl-substituted styrene (but not including alpha-methyl styrene), halogen-substituted styrene, vinyl toluene, vinyl naphthalene, and a mixture thereof. Specific examples of the alkyl-substituted styrene may include p-methyl styrene, o-ethyl styrene, m-ethyl styrene, p-ethyl styrene, p-t-butyl styrene, and 2,4-dimethyl styrene.

The vinyl cyanide compound may include acrylonitrile, methacrylonitrile, fumaronitrile, or a combination thereof.

In an embodiment, the (C) aromatic vinyl compound-vinyl cyanide compound copolymer may be a styrene-acrylonitrile copolymer (SAN) having a weight average molecular weight of 80,000 to 200,000 g/mol.

In an embodiment, the (C) aromatic vinyl compound-vinyl cyanide compound copolymer may be included in an amount of greater than or equal to 40 wt%, for example greater than or equal to 45 wt%, for example greater than or equal to 50 wt%, and for example less than or equal to 60 wt%, for example less than or equal to 55 wt%, for example 40 to 60 wt%, for example 45 to 55 wt% based on 100 wt% of the base resin.

Within the above weight range, the thermoplastic resin composition may have excellent fluidity, heat resistance, and impact resistance.

### (D) Aromatic Vinyl Compound-Vinyl Cyanide Compound Copolymer Having Weight Average Molecular Weight of Greater Than or Equal to 5,000,000 g/mol

In an embodiment, the (D) aromatic vinyl compound-vinyl cyanide compound copolymer having the weight average molecular weight of greater than or equal to 5,000,000 g/mol serves to improve the appearance properties of the thermoplastic resin composition.

The weight average molecular weight of the aromatic vinyl compound-vinyl cyanide compound copolymer may be greater than or equal to 5,000,000 g/mol, for example 5,000,000 to 10,000,000 g/mol, for example 5,000,000 to 9,000,000 g/mol, for example 5,000,000 to 8,000,000 g/mol, or for example 5,000,000 g/mol to 7,000,000 g/mol.

In an embodiment, the (D) aromatic vinyl compound-vinyl cyanide compound copolymer having the weight average molecular weight of greater than or equal to 5,000,000 g/mol may be a styrene-acrylonitrile copolymer having a weight average molecular weight of greater than or equal to 5,000,000 g/mol.

The (D) aromatic vinyl compound-vinyl cyanide compound copolymer having the weight average molecular weight of greater than or equal to 5,000,000 g/mol according to an embodiment may be, for example included in an amount of 1 to 5 parts by weight, or for example 1 to 3 parts by weight, based on 100 parts by weight of the base resin. Within the range of parts by weight, the thermoplastic resin composition and molded articles using the same may have excellent appearance characteristics because flow marks are suppressed.

### (E) Ultraviolet (UV) Stabilizer

The thermoplastic resin composition according to an embodiment may further include an (E) UV stabilizer in addition to the above (A-1) to (D).

The (E) UV stabilizer blocks the penetration of ultraviolet rays, thereby delaying the oxidation of the thermoplastic resin composition and molded articles produced therefrom by ultraviolet rays, providing excellent light resistance and/or weather resistance of the thermoplastic resin composition and molded articles produced therefrom.

As the (E) UV stabilizer, an amine-based light stabilizer, a quencher, a peroxide decomposer, a radical scavenger, or a combination thereof may be used.

The (E) UV stabilizer may be further included in an amount of 0.1 to 1 part by weight based on 100 parts by weight of the base resin. Within the above weight part range, light resistance and/or weather resistance of the thermoplastic resin composition may be improved.

### (F) Additives

In addition to the components (A-1) to (E), the thermoplastic resin composition according to an embodiment may further include one or more additives required in order to balance physical properties while exhibiting excellent impact resistance, heat resistance, fluidity, and appearance characteristics without deterioration of other physical properties, or one or more additives necessary according to a final use of the thermoplastic resin composition.

Specifically, the additives may be a flame retardant, a nucleating agent, a coupling agent, a filler, a plasticizer, an impact modifier, a lubricant, an antibacterial agent, a release agent, a heat stabilizer, an antioxidant, a pigment, and a dye, which may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

The thermoplastic resin composition according to the present invention may be prepared by a known method for preparing a thermoplastic resin composition.

For example, the thermoplastic resin composition according to the present invention may be prepared in the form of pellets by simultaneously mixing the components of the present invention and other additives and then melt-kneading them in an extruder.

Another embodiment provides a molded article produced using a thermoplastic resin composition according to an embodiment. The molded article may be produced by various methods known in the art, such as injection molding and extrusion molding using the thermoplastic resin composition.

Hereinafter, the present invention is illustrated in more detail with reference to examples. These examples, however, are not in any sense to be interpreted as limiting the scope of the invention.

### Examples 1 to 5 and Comparative Examples 1 to 7

The thermoplastic resin compositions of Examples 1 to 5 and Comparative Examples 1 to 7 were prepared according to the component content ratios described in Table 1, respectively.

0.8 parts by weight of metal stearate as a lubricant, 0.02 parts by weight of silicone oil as an impact modifier, and 2.5 parts by weight of carbon black were commonly added as other additives to the components shown in Table 1 and then, mixed in a conventional mixer and extruded with a twin-screw extruder having L/D = 29 and Φ = 45 mm at about 220 °C to manufacture pellet form.

The pellets were dried in a dehumidifying drier set at about 80 °C for 2 hours and injection-molded by using a 6 oz injection molding machine at a cylinder temperature of about 250 °C and a molding temperature of about 60 °C to manufacture specimens for measuring properties and appearance, and the measured properties are shown in Table 2.

**(Table 1)**

| Compon ents | Weight unit | Examples | | | | | Comparative Examples | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| (A-1) | wt% | 15 | 20 | 25 | 25 | 30 | 40 | - | 10 | 20 | 20 | 20 | 20 |
| (A-2) | wt% | 15 | 20 | 15 | 15 | 10 | - | 40 | 30 | 20 | 20 | 20 | 20 |
| (B) | wt% | 10 | 10 | 10 | 20 | 10 | 10 | 10 | 20 | - | - | 5 | 10 |
| (B') | wt% | - | - | - | - | - | - | - | - | 20 | 60 | 45 | 30 |
| (C) | wt% | 60 | 50 | 50 | 40 | 50 | 50 | 50 | 40 | 40 | - | 10 | 20 |
| (D) | parts by weight | 1.5 | 3 | 3 | 3 | 3 | 3 | 3 | 3 | 3 | 3 | 3 | 3 |
| (E) | parts by weight | 0.5 | 0.5 | - | - | - | - | 0.5 | 0.5 | - | - | - | - |

Part by weight: part by weight based on 100 parts by weight of base resin ((A-1)+(A-2)+(B) or (B')+(C))
(A-1): An acrylonitrile-styrene-acrylate graft copolymer (g-ASA) that a styrene-acrylonitrile copolymer was grafted to an acrylate-based rubbery polymer including butyl acrylate and having an average particle diameter of about 130 nm was used (Lotte Chemical Corporation).
(A-2): An acrylonitrile-styrene-acrylate graft copolymer (g-ASA) that a styrene-acrylonitrile copolymer was grafted to an acrylate-based rubbery polymer including butyl acrylate and having an average particle diameter of about 320 nm was used (Lotte Chemical Corporation).
(B): An N-phenyl maleimide-styrene-maleic anhydride copolymer including about 49 wt% of an N-phenyl maleimide-derived component, about 49 wt% of a styrene-derived component, and about 2 wt% of a maleic anhydride-derived component and having a glass transition temperature of about 195 °C was used (Denka Company Ltd.).
(B'): An alpha-methyl styrene-styrene-acrylonitrile copolymer including about 54 wt% of an alpha-methyl styrene-derived component, about 19 wt% of a styrene-derived component, and about 27 wt% of an acrylonitrile-derived component and having a glass transition temperature of about 116 °C (Lotte Chemical Corporation).
(C): A styrene-acrylonitrile copolymer including about 72 wt% of a styrene-derived component and about 28 wt% of an acrylonitrile-derived component and having a weight average molecular weight of about 97,000 g/mol was used (Lotte Chemical Corporation).
(D): An ultra-high molecular weight styrene-acrylonitrile copolymer having a weight average molecular weight of about 5,500,000 g/mol was used (Zibo Huaxing Additives Co., Ltd.).
(E): A hindered amine light stabilizer (HALS) was used (BASF, Chimassorb 944).

### Evaluation

The specimens according to Examples 1 to 5 and Comparative Examples 1 to 7 were measured with respect to impact resistance, fluidity, heat resistance, and appearance characteristics in the following methods, and the results are shown in Table 2.

### 1. Impact Resistance (unit: kgf·cm/cm)

Izod impact strength of 1/8 inch thick notched specimen was measured according to ASTM D256.

### 2. Fluidity (unit: g/10 min)

Melt flow index (MI) was measured at 220 °C under a load condition of 10 kg according to ASTM D1238.

### 3. Heat Resistance

Vicat softening temperature (VST) was measured according to the evaluation method (B/50) specified in ISO 306.

### 4. Appearance Characteristics

A mold having a pinpoint gate structure was used to injection-mold the specimens having a size of 90 mm x 50 mm x 2 mm according to Examples 1 to 5 and Comparative Examples 1 to 7 at a high speed, and then, each specimen was examined with naked eyes to check whether or not flow marks were generated or not and then, evaluated into O (generated, clearly appear), Δ (generated, rather blurry), and X (not generated).

**(Table 2)**

| Evaluation | Examples | | | | | Comparative Examples | | | | | | |
|---|---|---|---|---|---|---|---|---|---|---|---|---|
| | 1 | 2 | 3 | 4 | 5 | 1 | 2 | 3 | 4 | 5 | 6 | 7 |
| Izod Impact strength (kgf·cm/cm) | 10 | 16 | 14 | 11 | 12 | 5 | 40 | 29 | 19 | 22 | 14 | 11 |
| Melt flow index (g/10min) | 16 | 11 | 13 | 5 | 14 | 28 | 3 | 4 | 1 | 4 | 5 | 7 |
| VST | 108 | 102 | 103 | 113 | 103 | 98 | 100 | 109 | 98 | 104 | 102 | 107 |
| Generation degree of flow mark | X | X | X | X | X | X | ○ | ○ | Δ | ○ | ○ | ○ |

Referring to Table 2, the thermoplastic resin compositions according to Examples 1 to 5 exhibited excellent impact resistance and fluidity and also excellent heat resistance. In addition, no flow marks were generated in the thermoplastic resin composition specimens according to Examples 1 to 5, but flow marks were generated in the thermoplastic resin composition specimens according to Comparative Examples 2 to 7.

Therefore, referring to Tables 1 and 2, it was confirmed that the thermoplastic resin compositions according to an embodiment could implement excellent impact resistance, fluidity, heat resistance, and appearance characteristics.

As described above, the present invention has been described through preferred embodiments, but a person having an ordinary skill would understand easily that the present invention is not limited thereto, and various modifications and variations may be possible without departing from the concept and scope of the following claims.

## Claims

1. A thermoplastic resin composition, comprising
based on 100 parts by weight of a base resin including
(A-1) 15 to 30 wt% of a first acrylate-based graft copolymer in which the average particle diameter of acrylate-based rubbery polymers is 100 to 200 nm;
(A-2) 10 to 25 wt% of a second acrylate-based graft copolymer in which the average particle diameter of acrylate-based rubbery polymers is 250 to 400 nm;
(B) 10 to 20 wt% of an N-substituted maleimide copolymer; and
(C) 40 to 60 wt% of an aromatic vinyl compound-vinyl cyanide compound copolymer, and
(D) 1 to 5 parts by weight of an aromatic vinyl compound-vinyl cyanide compound copolymer having a weight average molecular weight of greater than or equal to 5,000,000 g/mol,
wherein a weight ratio of (A-1) and (A-2) is 1:1 to 4:1.

2. The thermoplastic resin composition of claim 1, wherein
each of the (A-1) first acrylate-based graft copolymer and the (A-2) second acrylate-based graft copolymer is a graft copolymer of a mixture of an aromatic vinyl compound and a cyanide vinyl compound that is graft polymerized to 40 to 60 wt% of each acrylate-based rubbery polymer.

3. The thermoplastic resin composition of claim 1 or claim 2, wherein
at least one of the first acrylate-based graft copolymer (A-1) and the second acrylate-based graft copolymer (A-2) is an acrylonitrile-styrene-acrylate graft copolymer.

4. The thermoplastic resin composition of any one of claim 1 to claim 3, wherein
an N-substituted maleimide-derived component is included in an amount of 20 to 55 wt% based on 100 wt% of the (B) N-substituted maleimide-based copolymer.

5. The thermoplastic resin composition of any one of claim 1 to claim 4, wherein
a glass transition temperature (Tg) of the (B) N-substituted maleimide-based copolymer is 150 to 200 °C.

6. The thermoplastic resin composition of any one of claim 1 to claim 5, wherein
the (B) N-substituted maleimide-based copolymer is an N-phenyl maleimide-styrene-maleic anhydride (PMI-SM-MAH) copolymer.

7. The thermoplastic resin composition of any one of claim 1 to claim 6, wherein
the (C) aromatic vinyl compound-vinyl cyanide compound copolymer is a copolymer of a monomer mixture including 60 to 80 wt% of an aromatic vinyl compound and 20 to 40 wt% of a vinyl cyanide compound.

8. The thermoplastic resin composition of any one of claim 1 to claim 7, wherein
a weight average molecular weight of the (C) aromatic vinyl compound-vinyl cyanide compound copolymer is 80,000 to 200,000 g/mol.

9. The thermoplastic resin composition of any one of claim 1 to claim 8, wherein
in the (C) aromatic vinyl compound-vinyl cyanide compound copolymer,
the aromatic vinyl compound includes styrene unsubstituted or substituted with a halogen (but not including alpha-methyl styrene) or a C1 to C10 alkyl group, or a combination thereof and
the vinyl cyanide compound includes acrylonitrile, methacrylonitrile, fumaronitrile, or a combination thereof.

10. The thermoplastic resin composition of any one of claim 1 to claim 9, wherein
the (C) aromatic vinyl compound-vinyl cyanide compound copolymer is a styrene-acrylonitrile copolymer.

11. The thermoplastic resin composition of any one of claim 1 to claim 10, wherein
the (D) aromatic vinyl compound-vinyl cyanide compound copolymer having the weight average molecular weight of greater than or equal to 5,000,000 g/mol is a styrene-acrylonitrile copolymer having a weight average molecular weight of greater than or equal to 5,000,000 g/mol.

12. The thermoplastic resin composition of any one of claim 1 to claim 11, wherein
the thermoplastic resin composition further includes 0.1 to 1 part by weight of (E) a UV stabilizer based on 100 parts by weight of the base resin.

13. The thermoplastic resin composition of any one of claim 1 to claim 12, wherein
the thermoplastic resin composition further includes at least one additive selected from a flame retardant, a nucleating agent, a coupling agent, a filler, a plasticizer, an impact modifier, a lubricant, an antibacterial agent, a release agent, a heat stabilizer, an antioxidant, a pigment, and a dye.

14. A molded article produced from the thermoplastic resin composition of any one of claim 1 to claim 13.
